# EUROPÄISCHE PATENTSCHRIFT

(11) **EP 1 070 383 B1**
(45) Veröffentlichungstag und Bekanntmachung des Hinweises auf die Patenterteilung: **30.01.2002**
(21) Anmeldenummer: 99923379.4
(22) Anmeldetag: 23.03.1999
(51) Int. Cl.: H02P 6/22

(54) **VERFAHREN UND VORRICHTUNG ZUR ANSTEUERUNG EINES ELEKTRONISCH KOMMUTIERTEN MEHRPHASEN-GLEICHSTROMMOTORS**
METHOD AND DEVICE FOR CONTROLLING AN ELECTRONICALLY COMMUTATED POLYPHASE D.C. MOTOR
PROCEDE ET DISPOSITIF POUR LA COMMANDE D'UN MOTEUR POLYPHASE A COURANT CONTINU COMMUTE ELECTRONIQUEMENT

(30) Priorität: 07.04.1998 DE 19815425
(43) Veröffentlichungstag der Anmeldung: 24.01.2001
(73) Patentinhaber: ROBERT BOSCH GMBH, 70442 Stuttgart (DE)
(72) Erfinder: KRAUTH, Wolfgang, D-77855 Achern (DE); SCHWENK, Wolfgang, D-77704 Oberkirch (DE)
(86) Internationale Anmeldenummer: DE9900838
(87) Internationale Veröffentlichungsnummer: WO9952201

(56) Entgegenhaltungen:
- EP-A- 0 316 716
- EP-A- 0 671 811
- DE-A- 4 419 351

## Beschreibung

### Hintergrund der Erfindung

Die Erfindung betrifft ein Verfahren und eine Vorrichtung zur Ansteuerung eines elektronisch kommutierten, mehrphasigen Gleichstrommotors, dessen Wicklungsstränge über Schaltmittel, die von einer elektronischen Kommutierungsvorrichtung angesteuert werden, in vorbestimmter Folge mit einer Gleichspannungsquelle verbindbar sind, wobei Schritte zum Abbremsen des in inverser Drehrichtung laufenden Motors und zum Wiederanlauf desselben in Vorzugsdrehrichtung vorgesehen sind.

### Stand der Technik

Ein solches Verfahren und eine solche Vorrichtung sind aus der DE 44 19 351 A1 der ROBERT BOSCH GmbH bekannt.

Elektronisch kommutierte Gleichstrommotoren, insbesondere Mehrphasensynchronmotoren werden aufgrund ihres kleinen Aufbaus häufig in Kraftfahrzeugen, beispielsweise als Heizungs- und/oder Klimagebläsemotoren eingesetzt. Nachteilig dabei ist, daß diese Motoren im abgeschalteten Zustand über die auf der Läuferwelle befestigten Lüfterräder in inverser Drehrichtung drehen können. Die inverse Drehrichtung des Motors kann beispielsweise durch einen Staudruck und/oder Luftströmungen in Kraftfahrzeug bewirkt werden. Da dem Läufer eines elektronisch kommutierten Synchronmotors aufgrund fehlender Bürsten eine geringe Reibung, die sich ausschließlich aus dem Luftwiederstand und der Lagerreibung zusammensetzt, entgegengesetzt wird, kann ein solcher Motor bis zu seiner Maximaldrehzahl in inverser Drehrichtung drehen. Soll nun ein solcher in inverser Drehrichtung drehender Motor eingeschaltet werden, damit dieser beispielsweise ein Gebläse in Betrieb setzt, ist es sehr nachteilig, daß der Motor, je nachdem welche Stellung der Läufer gerade aufweist, entweder drehrichtig oder entgegengesetzt der Solldrehrichtung hochläuft.

Die bekannte Vorrichtung und das bekannte Verfahren sieht vor, daß die während der Inversdrehung des Rotors in den Wicklungssträngen des Stators induzierten Spannungen mit einem Schwellwert verglichen werden und in Abhängigkeit des Vergleichs eine definierte Bestromung der Wicklungsstränge erfolgt. Diese definierte Bestromung der Wicklungsstränge bei der inversen Drehung des Motors soll zum gezielten aktiven Abbremsen des Rotors dienen. Insbesondere wird nach einer durch einen Vergleich der in einem bestimmten Wicklungsstrang und im übemächsten Wicklungsstrang induzierten Spannungen mit dem Schwellwert erkannten Inversdrehung durch Einschalten eines mit dem bestimmten Wicklungsstrang verbundenen Leistungstransistors dieser Wicklungsstrang mit der Betriebsspannung verbunden, so daß ein Magnetfeld aufgebaut wird, das dem Magnetfeld des sich im Rotor drehenden Permanentmagneten derart entgegengerichtet ist, daß die inverse Drehbewegung des Rotors abgebremst wird. Damit bei dem bekannten Verfahren eine sichere Bremswirkung erreicht wird, wird Sorge getragen, daß beim Abbremsen die Frequenz der Strangströme der Hälfte der induzierten Spannung in den Wicklungssträngen entspricht. Aus diesem Grund muß die Elektronik zwischen den beiden Drehrichtungen unterscheiden und erfordert einen zusätzlichen Bauteileaufwand um den sicheren Anlauf aus der Inversdrehung zu ermöglichen.

### Kurzfassung der Erfindung

Es ist Aufgabe der Erfindung, ein Verfahren und eine Vorrichtung zur Ansteuerung eines elektronisch kommutierten mehrphasigen Gleichstrommotors, insbesondere Synchronmotors, so zu ermöglichen, daß ein aufgrund äußerer Einflüsse in inverser Drehrichtung drehender Motor zu jedem beliebigen Einschaltzeitpunkt aus seiner Inversdrehung abbremst und anschließend in seiner Vorzugsdrehrichtung anläuft, wobei für diese Funktion keine die Drehrichtung des Motors unterscheidenden zusätzlichen Baueinheiten nötig sein sollen.

Die obige Aufgabe wird erfindungsgemäß durch ein Verfahren gelöst, das folgende Schritte aufweist:
- einen ersten Schritt, der zu jedem Zeitpunkt jeweils nur eine Phase auswählt;
- einen zweiten Schritt, der eine Kommutierungserkennung ausführt, wobei die in der ausgewählten Phase in der zugehörigen Motorwicklung induzierte Spannung mit einer Referenzspannung verglichen wird; und
- einen dritten Schritt, der nach erkannter Kommutierung die ausgewählte Phase sowie die von der Kommutierungsvorrichtung zu kommutierende Phase um einen Schritt der vorbestimmten Folge weiter schaltet,
so daß sich bei der Drehung des Motors in Vorzugsrichtung für jede Phase ein konstanter Stromflußwinkel und bei Drehung des Motors in Inversrichtung für jede Phase stark unterschiedliche Stromflußwinkel einstellen, welche in Abhängigkeit vom Verlauf der zugehörigen induzierten Phasenspannung zu einem gegen die inverse Drehrichtung gerichteten Gegendrehmoment führen.

Die Aufgabe wird außerdem erfindungsgemäß gelöst durch eine Vorrichtung zur Ansteuerung eines elektronisch kommutierten, mehrphasigen Gleichstrommotors mit einem mit dem Motor verbundenen Leistungsschalter, der den einzelnen Wicklungssträngen des Motors eine von einer Gleichspannungsquelle abgeleitete gepulste Gleichspannung vorbestimmter Folge einspeist, einer den Leistungsschalterteil entsprechend der vorbestimmten Folge ansteuernden Kommutierungslogik, und Mitteln, die den Motor aus inverser Drehrichtung abbremsen und ihn in Vorzugsdrehrichtung wieder anlaufen lassen, die dadurch gekennzeichnet ist, daß
- eine mit den Motorwicklungen verbundene und mit einem Ausgangssignal von einer mit der Kommutierungslogik verbundenen Phasendiskriminatorschaltung beaufschlagte Phasenselektorschaltung zu jedem Zeitpunkt jeweils nur eine Phase auswählt,
- eine mit der von der Phasenselektorschaltung ausgewählten Phase beaufschlagte Kommutierungserkennungsschaltung eine Kommutierung durch Vergleich der in der ausgewählten Phase in der zugehörigen Motorwicklung induzierten Spannung mit einer Referenzspannung erkennt und ein Kommutierungserkennungssignal erzeugt, und
- die Phasendiskriminatorschaltung und damit die Kommutierungslogik auf jedes Kommutierungserkennungssignal von der Kommutierungserkennungsschaltung um einen Schritt in der vorbestimmten Folge weiter geschaltet werden, so daß sich bei Drehung des Motors in Vorzugsrichtung für jede Phase ein konstanter Stromflußwinkel und bei seiner Drehung in Inversrichtung für jede Phase stark unterschiedliche Stromflußwinkel einstellen, welche in Abhängigkeit vom Verlauf der zugehörigen, in jeder Phase induzierten Spannung ein gegen die Inversdrehung gerichtetes Gegendrehmoment erzeugen.

Weitere vorteilhafte Merkmale und Aufgaben der Erfindung werden in der nachstehenden Beschreibung einer Ausführungsform beispielhaft angewendet auf einen 6-Phasen-Synchronmotor deutlich, wenn diese anhand der beiliegenden Zeichnung gelesen wird.

Die -Zeichnungsfiguren-zeigen im einzelnen:
- Figur 1 ein Blockschaltbild einer Ausführungsform einer erfindungsgemäßen Vorrichtung zur Ansteuerung eines 6-phasigen Gleichstrommotors;
- Figur 2 A-D jeweils die induzierten Spannungen, die sich bei einer Drehung des Motors in Vorzugsrichtung durch die in Figur 1 gezeigte Ansteuervorrichtung in den sechs Wicklungssträngen des 6-phasigen Synchronmotors ergeben, die sich für die Kommutierung in Vorzugsdrehrichtung ergebenden Stromflußwinkel in den einzelnen Wicklungssträngen, die Selektorzeiten und Sperrzeiten des Phasenselektors sowie das sich im 6-Phasen-Motor einstellende Gegendrehmoment, insgesamt über einen elektrischen Winkel von 360 °; und
- Figuren 3A-D gleichartige Diagramme wie Figur 2 für eine Drehung des Motors in Inversrichtung.

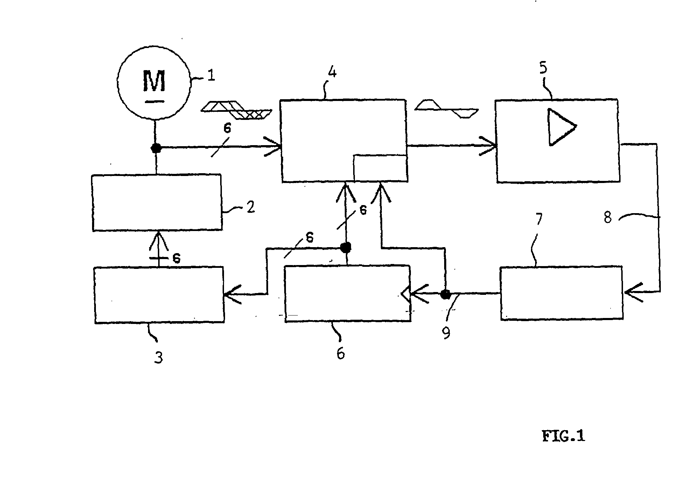

In Figur 1 weist ein Synchronmotor 1 insgesamt sechs Phasen äuf, welche jeweils um einen elektrischen Winkel von 60° phasenverschoben sind. Die sechs Wicklungsstränge des Motors 1 sind einerseits mit Leistungsschaltern eines Leistungsschalterteils 2 und andererseits mit einer Phasenselektorschaltung 4 verbunden. Angesteuert wird der Leistungsschalterteil 2 durch Ausgangssignale einer Kommutierungslogik 3. Durch den Phasenselektor 4 wird zu jedem Zeitpunkt nur eine der sechs Phasen ausgewählt und einer Kommutierungserkennungsschaltung 5 zugeführt. Die Kommutierungserkennungsschaltung erkennt eine Kommutierung durch Vergleich der in der von der Phasenselektorschaltung 4 ausgewählten Phase in der zugehörigen Motorwicklung induzierten Spannung mit einer Referenzspannung U_{ref} und erzeugt daraufhin ein Kommutierungserkennungssignal 8. Das Kommutierungserkennungssignal 8 triggert ein Monoflop 7, welches einen Ausgangsimpuls 9 der Zeitdauer t_blank erzeugt, der in invertierter Form einem Freigabeeingang der Phasenselektorschaltung 4 zugeführt wird, sodaß letztere für die Zeitdauer t_blank des Ausgangsimpulses 9 vom Monoflop 7 gesperrt wird, um Fehlkommutierungen zu vermeiden. Gleichzeitig schaltet der Ausgangsimpuls 9 vom Monoflop 7 einen Phasendiskriminator 6 um einen Zustand weiter. Die Ausgangssignale des Phasendiskriminators 6 wirken direkt auf die Kommutierungslogik 3 und auch auf die Phasenselektorschaltung 4.

Die in Figur 1 dargestellte Motoransteuervorrichtung zur Ansteuerung des elektronisch kommutierten 6-phasigen Synchronmotors 1 bewirkt, daß sich bei der Drehung des Motors in Vorzugsrichtung für jede Phase ein konstanter Stromflußwinkel und bei der Drehung des Motors 1 in die Inversrichtung für jede Phase stark unterschiedliche Stromflußwinkel einstellen, welche in Abhängigkeit vom Verlauf der zugehörigen, in jeder Phase induzierten Spannung ein gegen die Inversrichtung gerichtetes Gegendrehmoment erzeugen.

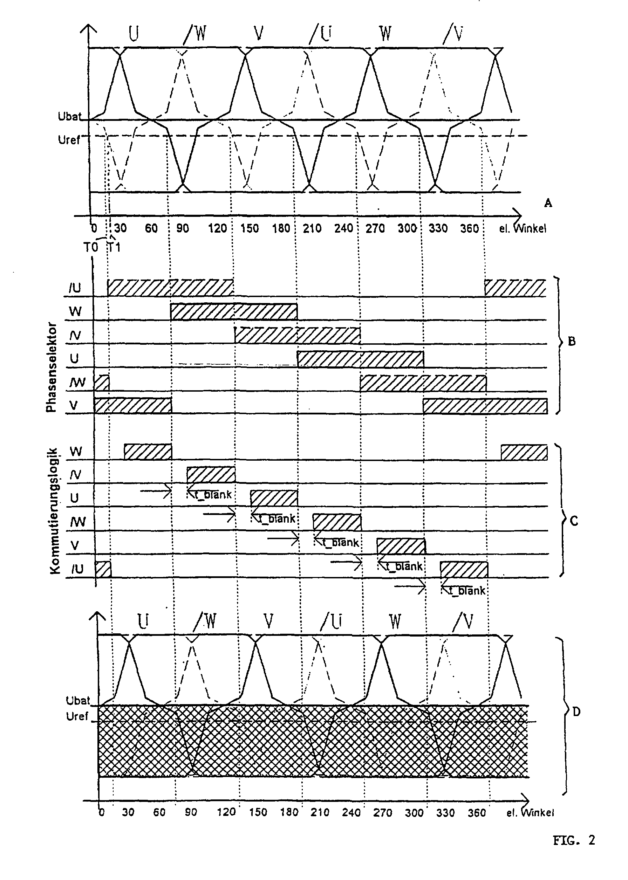

Nachstehend wird die Funktion und Wirkungsweise der in Figur 1 dargestellten Motoransteuervorrichtung für das Beispiel eines sechsphasigen Synchronmotors für den Motorlauf in Vorzugsrichtung anhand der Figur 2 näher erläutert:

### Drehung in Vorzugsrichtung:

Der Motor 1 besteht aus insgesamt sechs Phasen, die jeweils 60 ° elektrisch phasenverschoben sind. Zur Drehung des mit Permanentmagneten versehenen Rotors werden, wie Figur 2A zeigt, die einzelnen Phasen in der Reihenfolge U => / W => V => / U => W => / V aufeinanderfolgend gespeist. Der Phasendiskriminator 6 blendet zum Zeitpunkt T 0 alle Phasen aus, außer der Phase /U. Somit leitet die Phasenselektorschaltung 4 die induzierte Spannung von der Phase /U direkt an die Kommutierungserkennungsschaltung 5 weiter. Zum Zeitpunkt T 1 unterschreitet die durch die Drehbewegung des Rotors verursachte induzierte Spannung der Phase /U die durch die Referenzspannung U_{ref} gegebene Referenzschwelle. Daraufhin triggert die Kommutierungserkennungsschaltung 5 mit ihrem Ausgangssignal 8 das Monoflop 7, welches ein Ausgangssignal 9 mit der festen Zeitdauer t_blank erzeugt, das die Phasendiskriminatorschaltung 6 um einen Zustand weiterschaltet. Gleichzeitig wird die Phasenselektorschaltung 4 für die Zeitdauer t_blank des Monoflopimpulses 9 gesperrt, um Fehlkommutierungen zu vermeiden. Die Ausgangssignale der Phasendiskriminatorschaltung 6 wirken direkt auf die Kommutierungslogik 3 ein. Diese schaltet daraufhin die Phase /W aus und die Phase /U ein. Nach Ablauf der Zeitdauer t_blank des Monoflopimpulses 9 wird die Phasenselektorschaltung 4 für die Phase W freigeschaltet. Somit vergleicht die Kommutierungserkennungsschaltung 5 die induzierte Spannung in der Phase W mit der Referenzspannung U_{ref}. Bei Unterschreiten der durch diese Referenzspannung U_{ref} gegebenen Schwelle wird die Stromspeisung, wie bereits zuvor beschrieben, von der Phase V auf die Phase W umgeschaltet. Dieser Vorgang wiederholt sich für eine elektrische Vollwelle insgesamt sechs mal bei identischen Stromflußwinkeln von 120° je Phase (vgl. Figur 2B).

In Figur 2D veranschaulicht der kreuzschraffierte Bereich die Drehmomentbildung in zwei Phasen. Somit wirkt durch die Funktion der erfindungsgemäßen Ansteuervorrichtung auf den in Vorzugsrichtung drehenden Motor über die mehreren Phasen ein konstantes Drehmoment ein.

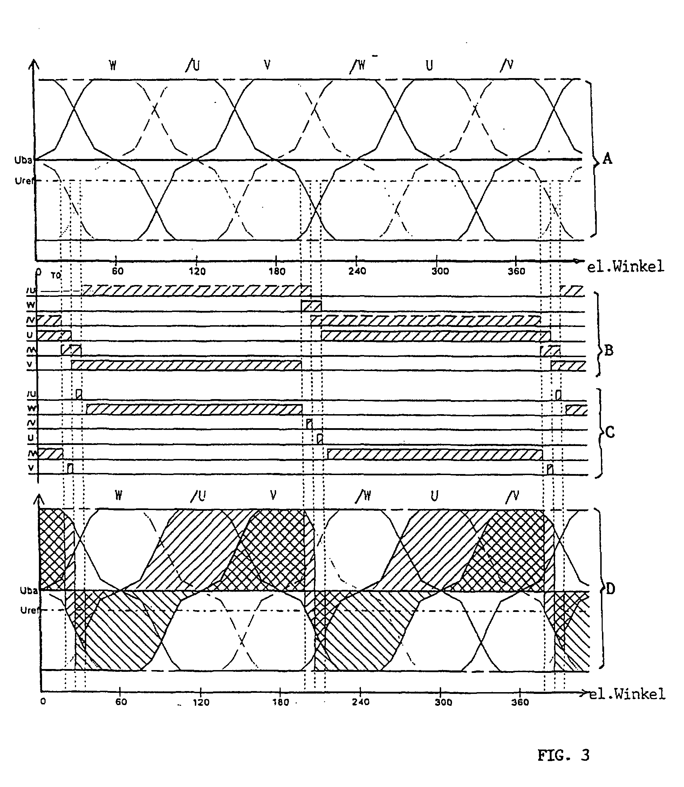

Die in den Figuren 3A-3D gezeigten Diagramme geben ebenfalls über einen elektrischen Winkel von 360° die Funktionsweise des von der erfindungsgemäßen Ansteuervorrichtung angesteuerten Motors bei dessen Lauf in inverser Drehrichtung wieder.

### Drehung in Inversrichtung:

Die Phasendiskriminatorschaltung 6 schaltet bei jedem Kommutierungsimpuls, das ist der Ausgangsimpuls 9 des Monoflops 7 einen Zustand weiter, unabhängig davon, von welcher Phase der Kommutierungsimpuls 9 ausgelöst wird. Bei Inversdrehung des Rotors dreht sich, wie Figur 3A zeigt, die Reihenfolge der einzelnen Phasen um, d.h. U => /V => W => /U => V => /W.

Zum Zeitpunkt T 0 wird die Phase /W von der Phasenselektorschaltung 4 an die Kommutierungserkennungsschaltung 5 durchgeschaltet. Unterschreitet die induzierte Spannung in Phase /W die durch die Referenzspannung U_{ref} angegebene Schwelle, wird ein Kommutierungserkennungsimpuls 8 dem Monoflop 7 angelegt, das den Ausgangsimpuls 9 der Zeitdauer t_bank erzeugt, der der Phasendiskriminatorschaltung 6 anliegt. Diese schaltet die Stromführung von Phase /V auf Phase /W um. Nach Ablauf der Zeitdauer t_blank wird durch die Phasenselektorschaltung 4 die Phase V zur Kommutierungserkennung ausgewählt. Zu diesem Zeitpunkt ist die induzierte Spannung in Phase V bereits unter die durch U_{ref} gegebene Schwelle gegangen, wodurch sofort ein Kommutierungsimpuls ausgelöst wird. Das Weiterschalten der Phasendiskriminatorschaltung 6 führt zum Wechsel der Stromführung von Phase U auf Phase V. Die Phasenselektorschaltung 4 wählt nach Ablauf der Zeitdauer t_blank die Phase /U zur Kommutierungserkennung aus. Da auch die induzierte Spannung /U unterhalb der durch U_{ref} angegebenen Kommutierungsschwelle liegt, erkennt auch hier die Kommutierungserkennungsschaltung 5 sofort die Kommutierung. Figur 3 zeigt, daß innerhalb eines elektrischen Winkels von 360° insgesamt sechs Kommutierungen erfolgen, deren sequentielle Abfolge identisch ist mit der Folge bei der Drehung des Motors in Vorzugsrichtung. Der eigentliche Unterschied der in Figur 3 gezeigten Funktion bei der Drehung des Motors 1 in Inversrichtung gegenüber der anhand der Figur 2 erläuterten Drehung desselben in Vorzugsrichtung liegt in den aus Figur 3B zu erkennenden verschieden großen Stromflußwinkeln der einzelnen Phasen.

Die Richtung des resultierenden Drehmoments (vgl. die kreuzschraffierten Bereiche in Figur 3D) hängt ab vom Vorzeichen der induzierten Spannung. Bei positiver induzierter Spannung wird ein Gegendrehmoment erzeugt, welches der Drehbewegung in Inversrichtung entgegenwirkt. Der Vergleich der Stromflußwinkel mit dem jeweils zugehörigen Lauf der induzierten Spannungen zeigt, daß durch die langen Stromflußwinkel bei der Inversdrehung mehr Gegendrehmoment als Drehmoment in Inversdrehrichtung erzeugt wird. Dies führt zu einem schnellen Abbremsen des Motors und zu einem anschließenden automatischen Anlauf in Vorzugsdrehrichtung.

Das erfindungsgemäße Verfahren zur Ansteuerung eines mehrphasigen Gleichstrommotors wählt mittels der Phasenselektorschaltung 4 jeweils nur eine der Kommutierungserkennungsschaltung 5 zugeführte Phase zur Kommutierungserkennung aus. Nach jeder von der Kommutierungserkennungsschaltung 5 erkannten Kommutierung werden durch den vom Monoflop 7 erzeugten Impuls 9 konstanter Zeitdauer t_blank die Phasendiskriminatorschaltung 6 und durch dieselbe die Kommutierungslogik 3 in fest vorgegebener Reihenfolge weitergeschaltet. Dies geschieht in Form eines durch die Kommutierungslogik 3 verkörperten sequentiellen Schaltwerks unabhängig von der Drehrichtung des Motors 1. Bei Drehung des Motors 1 in Vorzugsrichtung werden somit konstante Stromflußwinkel von 120° je Phase erreicht. Bei einer Drehung des Motors in Inversrichtung ergeben sich durch dieses Verfahren stark unterschiedliche Stromflußwinkel der einzelnen Phasen, wobei diese unterschiedlichen Stromflußwinkel in Abhängigkeit vom Verlauf der jeweils zugehörigen, in den einzelnen Phasen induzierten, Spannungen zu einem Gegendrehmoment führen. Dieses Gegendrehmoment bewirkt ein Abbremsen des Motors in den Stillstand und einen sicheren Anlauf in Vorzugsrichtung. Die in Figur 1 gezeigte Elektronik unterscheidet dabei nicht zwischen den beiden Drehrichtungen. Aus diesem Grund ist kein zusätzlicher Elektronikaufwand erforderlich, um einen sicheren Anlauf aus der Inversdrehung zu ermöglichen.

Das erfindungsgemäße Verfahren und die erfindungsgemäße Vorrichtung zur Ansteuerung eines mehrphasigen Gleichstrommotors beschränkt sich nicht auf das vorstehend beschriebene Ausführungsbeispiel. Insbesondere unterliegt die Anzahl der Wicklungsstränge bzw. der Phasen des Motors keiner Einschränkung.

## Patentansprüche

1. Verfahren zur Ansteuerung eines elektronisch kommutierten, mehrphasigen Gleichstrommotors, dessen Wicklungsstränge über Schaltmittel, die von einer elektronischen Kommutierungsvorrichtung angesteuert werden, in vorbestimmter Folge mit einer Gleichspannungsquelle verbindbar sind, wobei Schritte zum Abbremsen des in inverser Drehrichtung laufenden Motors und zum Wiederanlauf derselben in Vorzugsdrehrichtung vorgesehen sind,
**dadurch gekennzeichnet, daß**
- ein erster Schritt zu jedem Zeitpunkt jeweils nur eine Phase auswählt;
- ein zweiter Schritt eine Kommutierungserkennung ausführt, wobei die in der ausgewählten Phase in der zugehörigen Motorwicklung induzierte Spannung mit einer Referenzspannung verglichen wird; und
- ein dritter Schritt nach erkannter Kommutierung die ausgewählte Phase sowie die von der Kommutierungsvorrichtung zu kommutierende Phase um einen Schritt der vorbestimmten Folge weiter schaltet,
so daß sich bei der Drehung des Motors in Vorzugsrichtung für jede Phase ein konstanter Stromflußwinkel und bei Drehung des Motors in Inversrichtung für jede Phase stark unterschiedliche Stromflußwinkel einstellen, welche in Abhängigkeit vom Verlauf der zugehörigen induzierten Phasenspannung zu einem gegen die Inversrichtung gerichteten Gegendrehmoment führen.

2. Verfahren nach Anspruch 1, **dadurch gekennzeichnet, daß** die vorbestimmte Folge für beide Drehrichtungen des Motors gleich ist.

3. Vorrichtung zur Ansteuerung eines elektronisch kommutierten, mehrphasigen Gleichstrommotors (1) mit einem mit dem Motor (1) verbundenen Leistungsschalter (2), der den einzelnen Wicklungssträngen des Motors (1) eine von einer Gleichspannungsquelle abgeleitete gepulste Gleichspannung vorbestimmter Folge einspeist,
einer den Leistungsschalterteil (2) entsprechend der vorbestimmten Folge ansteuernden Kommutierungslogik (3), und
Mitteln (4-7), die den Motor (1) aus inverser Drehrichtung abbremsen und ihn in Vorzugsdrehrichtung wieder anlaufen lassen,
**dadurch gekennzeichnet, daß**
- eine mit den Motorwicklungen verbundene und mit einem Ausgangssignal von einer mit der Kommutierungslogik (3) verbundenen Phasendiskriminatorschaltung (6) beaufschlagte Phasenselektorschaltung (4) zu jedem Zeitpunkt jeweils nur eine Phase auswählt,
- eine mit der von der Phasenselektorschaltung (4) ausgewählten Phase beaufschlagte Kommutierungserkennungsschaltung (5) eine Kommutierung durch Vergleich der in der ausgewählten Phase in der zugehörigen Motorwicklung induzierten Spannung mit einer Referenzspannung (U ref) erkennt und ein Kommutierungserkennungssignal (8) erzeugt, und
- die Phasendiskriminatorschaltung (6) und damit die Kommutierungslogik (3) auf jedes Kommutierungserkennungssignal (8) von der Kommutierungserkennungsschaltung (5) um einen Schritt in der vorbestimmten Folge weiter geschaltet werden, so daß sich bei Drehung des Motors (1) in Vorzugsrichtung für jede Phase ein konstanter Stromflußwinkel und bei seiner Drehung in Inversrichtung für jede Phase stark unterschiedliche Stromflußwinkel einstellen, welche in Abhängigkeit vom Verlauf der zugehörigen, in jeder Phase induzierten Spannung ein gegen die Inversdrehung gerichtetes Gegendrehmoment erzeugen.

4. Vorrichtung nach Anspruch 3, **dadurch gekennzeichnet, daß** ein mit dem Kommutierungserkennungssignal (8) getriggertes Monoflop (7) ein die Phasendiskriminatorschaltung weiterschaltendes Schaltsignal (9) von vorbestimmter Zeitdauer (t_blank) erzeugt, das gleichzeitig die Phasenselektorschaltung (4) für die vorbestimmte Zeitdauer (t_blank) sperrt.

5. Vorrichtung nach Anspruch 3 oder 4, **dadurch gekennzeichnet, daß** die Phasendiskriminatorschaltung (6) und die Kommutierungslogik (3) ein sequentielles Schaltwerk bilden.

6. Vorrichtung nach einem der Ansprüche 3 bis 5, **dadurch gekennzeichnet, daß** das Weiterschalten der Phasendiskriminatorschaltung (6) und der Kommutierungslogik (3) unabhängig von der Drehrichtung des Motors (1) erfolgen.

7. Vorrichtung nach einem der Ansprüche 3 bis, **dadurch gekennzeichnet, daß** der Motor (1) ein 6-Phasen-Synchronmotor ist und die von der Kommutierungslogik (3) gesteuerte vorbestimmte Kommutierungsfolge des Leistungsschalterteils (2) U => / W => V => / U => W => / V, ... usw. ist.

8. Vorrichtung nach Anspruch 7, **dadurch gekennzeichnet, daß** die vorbestimmte Zeitdauer (t_blank) des Schaltsignals (9) des Monoflops (7) bei dem 6-Phasen-Motor einem elektrischen Winkel von etwa 15° entspricht.

## Claims

1. Method for driving an electronically commutated, polyphase DC motor, whose winding sections can be connected in a predetermined sequence to a DC voltage source via switching means which are driven by an electronic commutation apparatus, with steps being provided for braking the motor, when it is running in the inverse rotation direction, and for restarting said motor in the preferred rotation direction,
**characterized in that**
- a first step in each case selects only one phase at each time;
- a second step carries out commutation identification, with the voltage induced in the associated motor winding in the selected phase being compared with a reference voltage; and
- once commutation has been identified, a third step switches the selected phase and the phase to be commutated by the commutation apparatus onwards by one step in the predetermined sequence,
so that, when the motor is rotating in the preferred direction, a constant current flow angle is set for each phase, and when the motor is rotating in the inverse direction, greatly different current flow angles are set for each phase, which current flow angles lead to an opposing torque, directed in the opposite direction to the inverse direction, as a function of the profile of the associated induced phase voltage.

2. Method according to Claim 1, **characterized in that** the specific sequence is the same for both motor rotation directions.

3. Apparatus for driving an electronically commutated, polyphase DC motor (1) having a circuit breaker (2) which is connected to the motor (1) and supplies the individual winding sections of the motor (1) with a pulsed DC voltage, derived from a DC voltage source, in a predetermined sequence,
having commutation logic (3) which drives the circuit breaker part (2) in accordance with the predetermined sequence, and
having means (4-7) which brake the motor (1) from the inverse rotation direction and allow it to start again in the preferred rotation direction,
**characterized in that**
- a phase selector circuit (4), which is connected to the motor windings and to which an output signal is applied from a phase discriminator circuit (6) which is connected to the commutation logic (3), in each case selects only one phase at each time,
- a commutation identification circuit (5), to which the phase which is selected by the phase selector circuit (4) is applied identifies commutation by comparison of the voltage induced in the selected phase in the associated motor winding with a reference voltage (U ref), and produces a commutation identification signal (8), and
- the phase discriminator circuit (6) and hence the commutation logic (3) are switched onwards by one step in the predetermined sequence in response to each commutation identification signal (8) from the commutation identification circuit (5), so that a constant current flow angle is set for each phase when the motor (1) is rotating in the preferred direction, and greatly different current flow angles are set for each phase when the motor is rotating in the inverse direction, which current flow angles produce an opposing torque, which is directed in the opposite direction to the inverse rotation, as a function of the profile of the associated voltage induced in each phase.

4. Apparatus according to Claim 3, **characterized in that** a monoflop (7) which is triggered by the commutation identification signal (8) produces a switching signal (9) which switches the phase discriminator circuit onwards and has a predetermined time duration (t_blank), which at the same time inhibits the phase selector circuit (4) for the predetermined time duration (t_blank).

5. Apparatus according to Claim 3 or 4, **characterized in that** the phase discriminator circuit (6) and the commutation logic (3) form a sequential switching mechanism.

6. Apparatus according to one of Claims 3 to 5, **characterized in that** the phase discriminator circuit (6) and the commutation logic (3) are switched onwards irrespective of the rotation direction of the motor (1).

7. Apparatus according to one of Claims 3 to [lacuna], **characterized in that** the motor (1) is a 6-phase synchronous motor, and the predetermined commutation sequence, which is controlled by the commutation logic (3), for the circuit breaker part (2) is U => / W => V => / U => W => / V, etc.

8. Apparatus according to Claim 7, **characterized in that** the predetermined time duration (t_blank) of the switching signal (9) of the monoflop (7) for the 6-phase motor corresponds to an electrical angle of approximately 15°.

## Revendications

1. Procédé de commande d'un moteur à courant continu polyphasé à commutation électronique dont les enroulements peuvent être reliés dans un ordre déterminé à une source de tension continue par des commutateurs commandés par un dispositif de commutation électronique,
avec des étapes pour freiner le moteur tournant en sens inverse et pour redémarrer celui-ci dans le sens de rotation préférentiel,
**caractérisé en ce que**
- dans une première étape à tout instant on ne sélectionne qu'une phase,
- dans une seconde étape on effectue une reconnaissance de commutation, la tension induite dans les phases sélectionnées dans l'enroulement correspondant du moteur étant comparée à une tension de référence et
- dans une troisième étape, après avoir reconnu la commutation, on continue à commuter la phase sélectionnée ainsi que la phase à commuter par le dispositif de commutation, selon un pas dans l'ordre prédéterminé,
de sorte que lors de la rotation du moteur dans la direction préférentielle, pour chaque phase on a un angle de passage de courant constant et pour la rotation du moteur dans la direction inverse, pour chaque phase on a des angles de passage de courant très différents, qui, en fonction du tracé de la tension de phase induite correspondante, aboutissent à un couple antagoniste, dirigé contre la direction inverse.

2. Procédé selon la revendication 1,
**caractérisé en ce que**
l'ordre prédéterminé pour les deux sens de rotation du moteur est le même.

3. Dispositif de commande d'un moteur à courant continu (1) polyphasé, à commutation électronique, comprenant un commutateur de puissance (2) relié au moteur (1), qui injecte selon un ordre prédéterminé, dans les différents enroulements du moteur (1), une tension continue pulsée, déduite de la source de tension continue,
une logique de commutation (3) qui commande la partie de commutation de puissance (2) selon l'ordre prédéterminé de commande et
des moyens (4-7) qui freinent le moteur (1) à partir de son sens de rotation inverse et le font de nouveau démarrer dans le sens de rotation préférentiel,
**caractérisé en ce qu'**
- un circuit de sélection de phase (4) ne sélectionne à tout instant qu'une phase, ce circuit étant relié aux enroulements du moteur et recevant un signal de sortie d'un circuit discriminateur de phase (6) relié à la logique de commutation (3),
- un circuit de reconnaissance de commutation (5) recevant la phase sélectionnée par le circuit de sélection de phase (4), reconnaît une commutation en comparant la tension induite dans la phase sélectionnée dans l'enroulement correspondant du moteur avec une tension de référence (U_{ref}), et génère un signal de reconnaissance de commutation (8) et
- le circuit discriminateur de phase (6) et la logique de commutation (3) reliée à celui-ci, sont commutés d'un pas dans l'ordre prédéterminé par chaque signal de reconnaissance de commutation (8) par le circuit de reconnaissance de commutation (5), de sorte que lors de la rotation du moteur (1) dans la direction préférentielle, pour chaque phase on a un angle de passage de courant constant et pour sa rotation dans la direction inverse, pour chaque phase, on a des angles de passage de courant très différents, et en fonction du tracé de la tension correspondante induite dans chaque phase, on a un couple antagoniste dirigé contre le sens de rotation inverse.

4. Dispositif selon la revendication 3,
**caractérisé en ce qu'**
une bascule monostable (7) déclenchée par le signal de reconnaissance de commutation (8) génère un signal de commutation (9) qui commute le circuit discriminateur de phase et a une durée prédéterminée (t_blank) qui bloque en même temps le circuit de sélection de phase (4) pendant la durée prédéterminée (t_blank).

5. Dispositif selon l'une quelconque des revendications 3 ou 4,
**caractérisé en ce que**
le circuit discriminateur de phase (6) et la logique de commutation (3) constituent un mécanisme de commutation séquentiel.

6. Dispositif selon l'une quelconque des revendications 3 à 5,
**caractérisé en ce que**
la poursuite de la commutation du circuit discriminateur de phase (6) et la logique de commutation (3) se font indépendamment du sens de rotation du moteur (1).

7. Dispositif selon l'une quelconque des revendications 3 à 5,
**caractérisé en ce que**
le moteur (1) est un moteur synchrone à 6 phases et l'ordre de commutation prédéterminé commandé par la logique de commutation (3) de la partie de commutation de puissance (2) est la suivante :
U=>/W=>V=>/U=>W=>/V, etc...

8. Dispositif selon la revendication 7,
**caractérisé en ce que**
la durée prédéterminée (t_blank) du signal de commutation (9) de la bascule monostable (7), dans le cas d'un moteur à 6 phases, correspond à un angle électrique d'environ 15°.
